# EUROPÄISCHE PATENTANMELDUNG

(11) **EP 2 154 656 A2**
(43) Veröffentlichungstag der Anmeldung: **17.02.2010**
(21) Anmeldenummer: 09010335.9
(22) Anmeldetag: 11.08.2009
(51) Int. Cl.: G07F 7/10, H04L 29/06

(54) **Phototoken**

(30) Priorität: 14.08.2008 DE 102008037793
(71) Anmelder: Giesecke & Devrient GmbH, 81677 München (DE)
(72) Erfinder: Schiller, Christoph, Dr., 81827 München (DE); Johne, Andreas, 82194 Gröbenzell (DE); Gerhardt, Nils, 80333 München (DE); Graf, Hans, 6850 Dornbirn (AT); Krysiak, Ralph, 85570 Markt Schwaben (DE)

(57) **Zusammenfassung**

Verfahren zum Authentisieren von authentisierungsbedürftigen Transaktionsdaten (TD)für eine elektronische Transaktion zwischen einem User auf einem Client (110) und einem Server (120) mit folgenden Verfahrensschritten:
Erfassen (210) von Transaktionsdaten (TD) über eine auf dem Client (110) bereitgestellte Eingabemaske (110a);
Senden (220) der erfassten Transaktionsdaten (TD) von dem Client (110) an den Server (120);
Lokales Erzeugen (230) eines Authentisierungsmerkmals (AM) durch ein in Bezug auf den User personalisiertes Token (130), wobei das Authentisierungsmerkmal (AM) zur Authentisierung der eingegebenen Transaktionsdaten (TD) bestimmt ist;
wobei das Token (130) das erzeugte Authentisierungsmerkmal (AM) an den Server (120) sendet und, dass das Authentisierungsmerkmal (AM) auf dem personalisierten Token (130) eine Repräsentation der Eingabemaske (110a) mit den Transaktionsdaten (TD) ist

## Beschreibung

Die Erfindung betrifft das technische Gebiet der Authentisierung von Transaktionen, z. B. Banküberweisungen, über ein Kommunikationsnetzwerk, z. B. dem Internet, lokalen Netzwerken oder Mobilfunknetzwerken.

Seit einiger Zeit machen verschiedene Dienstleistungsanbieter von der Möglichkeit Gebrauch, über bestehende, leistungsfähige Kommunikationsnetzwerke (wie z.B. das Internet oder Mobilfunknetze) die Dienste ihren Kunden in einer möglichst flexiblen Form anzubieten.

Banken bieten z. B. die Möglichkeit, dass Bankkunden im sogenannten Internet-Banking Transaktionen, wie z.B. elektronische Zahlungsanweisungen oder Verwaltung von Wertpapierfonds, über das Internet anstoßen bzw. ausführen zu können.

Der Kunde stellt hierbei über ein Kommunikationsgerät bzw. über einen Client, z.B. einen Heimcomputer, das über ein Computernetzwerk mit einem Bankserver verbunden ist, Transaktionsdaten bereit, die von dem Kommunikationsgerät über das Kommunikationsnetzwerk an den Bankserver übermittelt werden. Diese Transaktionsdaten umfassen sensitive Informationen wie z.B. Empfängerdaten einer elektronischen Zahlungsanweisung oder den Betrag, der zu überweisen ist. Heutige Kommunikationsnetzwerke gestatten es, durch eine Vielzahl von kryptographischen Verfahren, Daten sicher über die Kanäle des Kommunikationsnetzwerks zu übertragen. Nach Empfang der Transaktionsdaten durch den Bankserver müssen die Transaktionsdaten durch den Server authentisiert werden. Unter Authentisieren versteht man den jeweiligen Vorgang des Nachweises der Echtheit der Transaktionsdaten durch ein geeignetes Verfahren. Anders ausgedrückt, überprüft man bei der Authentisierung, ob die Transaktionsdaten "authentisch", also unverfälscht sind.

Verfahren zum Authentisieren von Transaktionsdaten im Rahmen des Internet-banking sind in vielfältiger Form im Stand der Technik bekannt.

Ein Verfahren besteht z.B. darin, den Kunden ein Passwort oder eine PIN zu vergeben, die zusammen mit den Transaktionsdaten dem Bankserver übermittelt werden muss. Die Transaktionsdaten gelten dabei dann als authentisch, d.h. als authentisiert, wenn der Kunde das "richtige" Passwort zum Übermitteln der Transaktionsdaten bereitstellen kann. Die Sicherheit dieses Verfahrens gegenüber Missbrauch kann allerdings kompromittiert werden, wenn die PIN nicht geheim gehalten werden konnte.

Der Stand der Technik hat dieses Problem aufgegriffen und sogenannte PIN/TAN-Verfahren bereitgestellt. Bei den TANs handelt es sich um Transaktionsnummern, die dem Fachmann auch unter dem Begriff OTP (One-Time-Password) bekannt sind. Ein höheres Maß an Sicherheit wird bei diesem Authentisierungsverfahren dadurch erlangt, dass die Transaktionsdaten (zusammen mit der PIN) mit einem "Geheimnis" verknüpft werden, d.h. also mit einer Kenntnis der Transaktionsnummer, wobei diese Transaktionsnummer für die Authentisierung nur einmal verwendbar ist. Ein potentieller Abhörer kann also durch Abhören der PIN zusammen mit der TAN nur ein einziges Mal Schaden anrichten. Dies ist ein Vorteil gegenüber dem traditionellen PIN-Verfahren, da dort der Abhörer, zumindest theoretisch, durch unerlaubtes Verwenden des abgehörten Passworts mehrmals Schaden anrichten könnte. Das PIN/TAN-Verfahren als eine spezielle Form des OTP-Verfahrens, wobei die TAN als OTP anzusehen ist, ist allerdings immer noch mit einer Reihe von Nachteilen verbunden.

Ein wesentlicher Nachteil ist darin zu sehen, dass dem Kunden auf umständlichem Wege, z.B. postalisch, die jeweils benötigte TAN oder eine Liste von TANs zugestellt werden muss.

Eine elektronische Lösung zeigt z.B. die DE 100 45 924. Hier wird die TAN, wenn sie vom Kunden benötigt wird, auf dessen Mobilfunktelefon aufgespielt, wobei dieses Mobilfunktelefon vorher für dieses elektronische TAN-Verfahren registriert werden muss.

Durch diese Lösung wird zwar die Umständlichkeit des TAN-Verfahrens im Hinblick auf die Zustellung von TAN-Listen gelöst, allerdings sind OTP-Verfahren im Allgemeinen nicht gegen sogenannte Man-in-the-middle-Attacken gesichert.

Eine häufig anzutreffende Variante der Man-in-the-middle-Attacke besteht darin, eine sogenannte Trojaner-Software auf das Kommunikationsgerät, z.B. dem Heimcomputer des Kunden, aufzuspielen. Die aufgespielte Trojaner-Software kann z.B. ein "Key-Logging" implementieren, bei dem die Tastatur des Kunden, die mit dem Heimcomputer verbunden ist, abgehört wird. Die über die Tastatur eingegebenen Transaktionsdaten können dann von der Trojaner-Software als eine Folge von Zeichenketten registriert werden, so dass der Abhörer durch Verwendung dieser abgehörten Zeichenketten eine "nicht-authentische" Zahlungsanweisung, unter Abänderung zumindest des Empfängers, absetzen kann.

Es besteht also das Problem, dass die Tastatur, als Eingabeschnittstelle eine Sicherheitslücke in Bezug auf Abhörangriffe darstellt.

Die Problematik wird im Stand der Technik auf verschiedene Art und Weise gelöst.

In der DE 100 15 098 wird vorgeschlagen, den Heimcomputer des Kunden mit einem Eingabemodul und einem Einsatzmodul dergestalt zu erweitern, dass die Funktionsweise der öffentlich zugänglichen Bankterminals für Bankkarten simuliert wird. Diesem System zu Folge, muss der Kunde bei jeder Transaktion eine Chipkarte, die den gewöhnlichen Bankkarten ähnelt, mit dem System zur Interaktion bringen. Die Eingabe der PIN durch den Kunden über die Tastatur wird somit sicher gegenüber Abhörattacken, da die Transaktionsdaten nur dann für eine Transaktion freigegeben werden, wenn auch gleichzeitig die Präsenz der dem Kunden zugeordneten Chipkarte erfasst wird.

Diese Lösung des Problems hat allerdings den Nachteil der Unflexibilität. Zum Einen werden Installationen von Hardware-Elementen wie z.B. das Eingabemodul und das Einsatzmodul notwendig. Zum Anderen ist geht für den Kunden eine örtliche Unabhängigkeit, das "Mobile Banking", verloren, da das Anstoßen der Transaktion von einem Kommunikationsknoten in dem Kommunikationsnetzwerk, z.B. von einem "Internet-Cafe", entweder unmöglich oder sehr umständlich wird, da die erforderlichen Komponenten an den Kommunikationsknoten installiert werden müssten, wobei Letzteres in der Praxis oft nicht möglich sein wird.

Andere Lösungen aus dem Stand der Technik lösen das obige Problem, durch das Bereitstellen von zusätzlichen Kontrollmechanismen, die ein Abhören der Tastatur zwar nicht verhindern, aber eine anschließende Manipulation der Transaktionsdaten durch den Abhörer sichtbar bzw. detektierbar machen.

Solche Lösungen sind z.B. aus dem Bereich des Authentisierens durch digitale Signaturen bekannt.

Bei der DE 10 2004 046 847 wird eine Kennung auf einem zusätzlichen, sicheren Display und in dem zu signierenden Dokument gleichzeitig zur Anzeige gebracht. Die Kennung wird dabei von einem externen Server erzeugt und ist vom Dokument verschieden. Bei Übereinstimmung der beiden zur Anzeige gebrachten Kennungen ist sichergestellt, dass sich das Signieren genau auf dieses Dokument bezieht. Manipulationen, bei denen der Abhörer das Signieren auf eine manipulierte Version des zu signierenden Dokuments zu richten versucht, werden so für den Abhörer erschwert.

Ein ähnliches Verfahren schlägt die DE 10152 462 vor, bei der jedoch durch einen externen Server aus einem zu signierenden Dokument eine Auswahl an kritischen, d.h. sicherheitssensitiven, Daten vorgenommen wird, die dann zu Kontrollzwecken auf einem zusätzlichen sicheren Display dargestellt und stellvertretend für das gesamte Dokument signiert werden können.

Als sicheres Display wird allgemein auch ein Gerät oder eine Teilkomponente bezeichnet, bei dem die Datenanzeige manipulationssicher vorgenommen wird, so daß der Benutzer zu keinem Zeitpunkt durch gefälschte Anzeigedaten getäuscht wird.

Die beiden obigen Verfahren haben aber den Nachteil, dass ein zusätzliches, sicheres Display notwendig ist, und außerdem eine Vielzahl von zusätzlichen Interaktionen mit dem externen Server vorgenommen werden müssen.

Eine andere im Stand der Technik offenbarte Lösung des "Tastaturabhörproblems" besteht darin, die Tastatur als Eingabeschnittstelle ganz zu umgehen. Als Stand der Technik wird in diesem Zusammenhang auf einen von der Anmelderin entnommenen Vorschlag verwiesen der entwickelt darin besteht, ein Mobiltelefon, das einen eingebauten Scanner umfasst, bereitzustellen, so dass Texte oder Bilder mit dem Scanner erfasst werden können. Die Texte werden dann von einer internen OCR-Software in maschinenlesbare Zeichen umgesetzt, um anschließend z.B. in eine Kurztextmitteilung (SMS) eingebettet zu werden und so leicht an eine weitere Stelle zur weiteren Bearbeitung übertragen werden können.

In der EP 1211841 wird ebenfalls die Verwendung von Tastaturen zur Eingabe von Daten für die Authentisierung durch digitale Signaturen umgangen. Die EP 1211841 offenbart, die zu signierenden Daten vor dem Signieren auf einem zusätzlichen sicheren, alphanumerischen Display zur Kontrolle anzuzeigen, wobei die zu signierenden Daten durch einen Sensor auf das zusätzliche Display übertragen werden. So wird sichergestellt, dass nur das auf dem zusätzlichen sicheren Display angezeigte Dokument signiert wird, d.h. dass sich der Signiervorgang genau auf das in dem sicheren Display angezeigte Dokument bezieht.

Allerdings setzt auch dieses Verfahren ein zusätzliches sicheres Display voraus, so dass das resultierende System umständlich und teuer ist. Es besteht also ein Bedarf an Verfahren und Systemen zum Authentisieren der Transaktionsdaten, die sicher gegen Abhören, insbesondere gegen Abhören der Tastatur, sind.

Des Weiteren besteht ein Bedarf an Verfahren zum Authentisieren, die durch mobile Mittel umgesetzt werden können und die keine Installation von zusätzlicher Hard- oder Software erfordern und die die Ortsunabhängigkeit gewähren.

Des Weiteren besteht ein Bedarf an Verfahren, die auch eine zeitliche Unabhängigkeit und ein noch weiter erhöhtes Maß an Sicherheit für den Kunden bei der Authentisierung der Transaktionsdaten bieten, z.B. durch ein Mindestmaß von Interaktionen mit dem Bankserver bzw. mit anderen externen Instanzen.

Des Weiteren besteht ein Bedarf an einem einfachen, unkomplizierten Verfahren zum Authentisierung der Transaktionsdaten, insbesondere ein Verfahren das ohne digitale Signaturen auskommt.

Die vorliegende Erfindung hat es sich deshalb zur Aufgabe gestellt, einen Weg aufzuzeigen, mit dem die obigen beschriebenen Probleme und Nachteile im Stand der Technik bezüglich der Authentisierung von Transaktionsdaten gelöst werden können.

Diese Aufgabe wird durch die beiliegenden Hauptansprüche gelöst, insbesondere durch ein Verfahren, ein System, eine Vorrichtung und ein Computerprogrammprodukt.

Im Folgenden wird die Erfindung anhand der verfahrensgemäßen Lösung beschrieben. Hierbei erwähnte Vorteile, Merkmale oder alternative Ausführungsformen sind ebenso auch auf die anderen beanspruchten Gegenstände zu übertragen, insbesondere auf das System, auf die Vorrichtung, sowie auf das Produkt. Mit anderen Worten können auch die vorstehend genannten beanspruchten Gegenstände mit Merkmalen weitergebildet sein, die in Zusammenhang mit dem Verfahren beschrieben und/ oder beansprucht worden sind und umgekehrt.

Der erfindungsgemäße Vorschlag betrifft ein Verfahren zum Authentisieren von authentisierungsbedürftigen Transaktionsdaten für eine Transaktion zwischen einem User und einem Server gelöst, wobei der User über den Client mit dem Server kommuniziert. Dabei werden die folgenden Verfahrenschritte ausgeführt:
Erfassen der Transaktionsdaten über eine auf dem Client bereitgestellte Eingabemaske;
Senden der erfassten Transaktionsdaten von dem Client an den Server; Lokales Erzeugen eines Authentisierungsmerkmals durch ein in Bezug auf den User personalisiertes Token, wobei das Authentisierungsmerkmal zur Authentisierung der eingegebenen Transaktionsdaten bestimmt ist.

Bei der elektronischen Transaktion kann es sich insbesondere um eine elektronische Zahlungsanweisung im Rahmen des sogenannten "Internet-Banking" oder "Mobile-Banking" handeln.

Die Transaktionsdaten umfassen, in elektronischer Form, eine dem User eindeutig zugeordnete PIN, darüber hinaus auch Userdaten, d.h. Senderdaten, insbesondere Bankverbindungsdaten des Users, Empfängerdaten, insbesondere Bankverbindungsdaten eines Empfängers der Zahlungsanweisung, und Betragsdaten, z.B. Verwendungszweck und eine Höhe des zur Zahlung anzuweisenden Betrages.

Bei dem Verfahren gemäß der Erfindung handelt es sich um ein sogenanntes Zwei-Faktoren-Authentisierungsverfahren, durch das, basierend auf zwei Faktoren, sichergestellt werden soll, dass die Transaktionsdaten zur Durchführung der elektronischen Transaktion wirklich vom User abgesetzt werden und in dem Sinne also "authentisch" sind. Der eine Faktor wird durch die Transaktionsdaten gebildet, während der andere Faktor durch das Authentisierungsmerkmal gebildet wird, das auf Grundlage der Transaktionsdaten erfindungsgemäß erzeugt wird.

Bei dem Authentisierungsverfahren handelt sich um eine Identitätsprüfung der Transaktionsdaten, um die Identität des Users sicherzustellen, wobei die Identität durch die Senderdaten in den Transaktionsdaten ausgedrückt ist..

Das Verfahren geht davon aus, dass der User über den Client, im Allgemeinen ein herkömmlicher Heimcomputer, oder ein mobiles, tragbares elektronisches Endgerät (PDA - Personal Digital Assistant, Laptop), über ein Netzwerk, z.B. dem Internet, mit dem Server, vorzugsweise ein zentraler Bankserver, kommunizieren kann.

Der User baut z.B. über eine auf dem Client laufende Browsersoftware eine Verbindung zu dem Bankserver auf zum Zwecke der Ausführung der Transaktion. Anschließend wird der User vom Server über die auf dem Client dargestellte Eingabemaske zur Eingabe der Transaktionsdaten aufgefordert.

Unter Client ist hierbei insbesondere die Gesamtheit der für die Kommunikation mit dem Server benötigten Komponenten zu verstehen, d.h. insbesondere ein Display zur Darstellung der Eingabemaske, eine Tastatur zur Eingabe der Transaktionsdaten und eine Rechnereinheit, portabel oder stationär, mit der entsprechenden Software und Schnittstellen, die für die Kommunikation mit der Server notwendig sind.

Nach lokalem Erfassen der Transaktionsdaten auf dem Client durch Eingabe der Transaktionsdaten mittels einer Tastatur durch den User, werden diese Transaktionsdaten auf herkömmlichem Wege über eine sichere Internetverbindung, also verschlüsselt, an den zentralen Bankserver übermittelt.

Das Verfahren gemäß der Erfindung sieht vor, dass zusätzlich zu den eben übermittelten Transaktionsdaten zu einem späteren Zeitpunkt eine digitale Form einer Repräsentation der auf der Eingabemaske dargestellten separaten Transaktionsdaten als das Authentisierungsmerkmal von einer Vorrichtung, dem Token, an den Server übermittelt wird. Der genaue Zeitpunkt der Übermittlung des Authentisierungsmerkmals ist beliebig und kann durch den Bankserver durch eine vordefinierbare Zeitspanne vorgegeben werden. Vorzugsweise ist die Repräsentation (also eine bildliche oder sonstige Abbildung der Eingabemaske (Browserfenster) mit den eingegebenen Transaktionsdaten) eine Klartextrepräsentation.

Unter Klartext-Repräsentation ist eine für den User lesbare Abbildung (insbesondere eine umkehrbare 1:1-Abbildung) der in der Eingabemaske dargestellten Transaktionsdaten zu verstehen. Das Token wird im Vorfeld von der Bank an den User ausgehändigt.

Ein das Aussehen und Verhalten der Eingabemaske steuerndes Sofware-Modul (z. B. ein CGI-Skript (Common-Gateway-Interface)) auf dem Bankserver stellt sicher, dass die Transaktionsdaten solange lesbar auf der Eingabemaske dargestellt werden, bis der User über das Token das Authentisierungsmerkmalerzeugt hat oder zumindest bis die Repräsentation der Eingabemaske vom Token erfasst worden ist.

Bei dem Token handelt es sich um eine tragbare und handliche Vorrichtung, zum Beispiel um eine Smartcard oder um ein mobiles Endgerät, die geeignet ist entweder direkt oder über den Client mit dem Server zum Zwecke der Übermittlung der abgebildeten Transaktionsdaten kommunizieren zu können. Das Token ist als separates "Bauteil", unabhängig vom Client ausgebildet worden. Das Token ist eineindeutig einem User zugeordnet. Dies erfolgt über eine Personalisierung die im Vorfeld stattfindet.

Gemäß einer Ausführungsform der Erfindung, ist das Token für die Verwendung in dem Authentisierungsverfahren vor der Übermittlung des Authentisierungsmerkmals entweder ad hoc für die aktuelle Transaktion personalisiert worden oder einmalig für alle zukünftigen vom User auszuführenden Transaktionen personalisiert worden.

Die Personalisierung erfolgt durch eine geeignete Personalisierungseinrichtung, wie zum Beispiel die Bank des Users oder, falls es sich bei dem Token um ein mobiles Endgerät handelt, um einen Mobilfunknetzbetreiber oder einen anderen vertrauenswürdigen Dienstanbieter.

Unter Personalisierung versteht man das Anlegen und Verwalten eines Datensatzes, zur ein-eindeutigen Verknüpfung einer ID des Tokens mit den User ein-eindeutig identifizierenden Identifikationsdaten (zum Beispiel Name inklusive Wohnort etc.). Die Daten der Personalisierung werden üblicherweise sicher und gegen Missbrauch und Fälschungen geschützt in dem Token abgelegt. Dies kann durch Verwendung von Kryptographie und/ oder Hardwareschutzelementen unterstützt werden.

Der Bankserver kann deshalb beim Empfang des Authentisierungsmerkmals mit hinreichender Sicherheit davon ausgehen, dass die zugehörigen Transaktionsdaten genau von dem berechtigten User übermittelt wurde, da das Token auf den User personalisiert ist.

Das Authentisierungsverfahren basiert also auf zwei Faktoren: Erstens die auf herkömmliche Weise übermittelten Transaktionsdaten, und zweitens durch das später übermittelte Authentisierungsmerkmal, das als OTP (One Time Password) für die Transaktion aufgefasst werden kann, da es für jede Transaktions-Session jeweils neu erzeugt wird.

Das Authentifizierungsverfahren gemäß der Erfindung hat eine ganze Reihe von Vorteilen gegenüber dem Stand der Technik.

Zum Einen ist das Authentisierungsverfahren sicher gegenüber einem Abhören der Tastatur durch geeignete Trojanersoftware, z.B. Key-Logging-Module, die von einem Abhörer auf den Client aufgebracht wurde.

Der Abhörer müsste nämlich, da die herkömmlich ermittelten Transaktionsdaten zusätzlich per Klartext-Repräsentation der auf der Eingabemaske dargestellten Transaktionsdaten verknüpft sind, eben auch zusätzlich eine solche Klartext-Repräsentation derselben Transaktionsdaten an den Bankserver übermitteln, was für den Abhörer nicht möglich ist. Die von dem User vorher übermittelten "echten" Transaktionsdaten unterscheiden sich nämlich, zumindest im Hinblick auf die Empfängerdaten, von den von dem Abhörer absetzbaren nicht-authentischen Transaktionsdaten. Der Server kann aus allen empfangenen Transaktionsdaten, d. h. den authentischen Transaktionsdaten und möglicherweise einer Anzahl an nicht-authentischen Transaktionsdaten, mittels des von dem personalisierten Token empfangenen Authentisierungsmerkmals die vom User abgesetzten Transaktionsdaten eindeutig auswählen.

Ein weiterer Vorteil der Erfindung besteht darin, dass das Authentisierungsmerkmal durch den User lokal generierbar ist. Für die Erzeugung des Authentisierungsmerkmals ist keine Interaktion insbesondere mit dem Bankserver oder mit externen Quellen notwendig. Dies gibt dem User eine große Flexibilität im Hinblick auf die technische Ausstattung und auch räumliche Flexibilität, da das Token an jedem Ort einsetzbar ist, sei es an einem Heimcomputer, oder an einem öffentlich zugänglichen Computer oder Kommunikationsgerät.

Ein weiterer Vorteil der Erfindung besteht darin, dass die genaue Realisierung des Authentisierungsmerkmals als Abbildung oder Repräsentation der dargestellten Transaktionsdaten auf der Eingabemaske ebenfalls flexibel ist. Gemäß einer Ausführungsform handelt es sich, wie erwähnt, um ein digitalisiertes Bild der Eingabemaske mit den Transaktionsdaten. Gemäß einer anderen Ausführungsform kann es sich aber auch um eine sprachliche phonetische Repräsentation handeln. Hierbei spricht der User die Transaktionsdaten z.B. über auf ein auf dem Token angeordnetes Mikrofon als entsprechenden Sprachdatei auf das Token auf.

Weitere Flexibilitäten ergeben sich in zeitlicher Hinsicht und insbesondere daraus, dass der Vorgang des Personalisierens lediglich vor dem Übermitteln des Authentisierungsmerkmals an den Server zu erfolgen hat. Sonst aber zu einem beliebigen Zeitpunkt personalisiert werden kann.

Im Hinblick auf das Übermitteln der Authentisierungsmerkmals an den Server besteht zeitliche Flexibilität, da das Authentisierungsmerkmal als solches vollständig entkoppelt ist von den von dem User über den Client übermittelten Transaktionsdaten. Das Authentisierungsmerkmal in seiner digitalen Form, ob Bild oder Sprachdatei, kann insbesondere zu einem deutlich späteren Zeitpunkt als die Transaktionsdaten an den Server übermittelt werden, um z.B. Übertragungskosten zu sparen. Nach dem Erhalt der Transaktionsdaten von dem Client verharrt der Server in einer Warteposition bei die Transaktion solange nicht freigeben wird, bis das Authentisierungsmerkmal von dem User über sein personalisiertes Token ermittelt und dort empfangen wurde.

Gemäß einer Ausführungsform ist z.B. der Server so eingestellt, dass die Transaktion automatisch abgebrochen wird, wenn innerhalb einer voreingestellten Zeitspanne, z.B. eines Tages, das zugehörige Authentisierungsmerkmal nicht empfangen wird. Dies gibt dem User eine zusätzliche Flexibilität, da der User durch einfache Unterlassung des zugehörigen Authentisierungsmerkmals die Transaktion abbrechen lassen kann, wenn sich der User zwischenzeitlich anderweitig entschieden haben sollte.

Die Aufgabe wird auch durch ein weiteres Verfahren zur Authentisierung der Transaktionsdaten anhand des Tokens gelöst, wobei das Token zur Implementierung dieses Verfahrens bis auf ein einfaches numerisches Display keinerlei weitere Output-Schnittstellen aufweisen muss.

Bei diesem Verfahren wird nach der Eingabe der Transaktionsdaten über die Eingabemaske, wie im vorigen Verfahren, nach dem Übermitteln der Transaktionsdaten von dem Client an den Server durch den Server ein Signal an den Client übermittelt, auf Grundlage dessen eine Auswahl der Transaktionsdaten auf der Eingabemaske in visuell veränderter Form z.B. durch farbliche Unterlegung, auf der Eingabemaske dargestellt werden.

Diese Auswahl der Transaktionsdaten bzw. das Signal basiert auf einer Zufallsauswahl, die der Server auf die empfangenen Transaktionsdaten anwendet, wobei vorteilhafter Weise insbesondere die Empfängerdaten bei der Zufallsauswahl miteinbezogen werden.

Das vom Server an den Client ausgesandte Signal bewirkt neben der visuellen Hervorhebung der Zufallsauswahl der Transaktionsdaten auch eine Darstellung der jeweils ausgewählten Transaktionsdaten in verschlüsselter Form auf Grundlage eines Serverschlüssels. Diese Darstellung erfolgt vorteilhafterweise auf dem Display, das mit dem Client verbunden ist, in einem separaten Fenster in maschinenlesbarer Form, z.B. durch einen Barcode, Bitstream o.ä. Durch das optische Empfangsmodul des Tokens wird die in dem Fenster dargestellte verschlüsselte Auswahl der Transaktionsdaten als digitales Bild von dem Token erfasst und durch einen im Token gespeicherten, zum Serverschlüssel passenden Schlüssel entschlüsselt und in dieser entschlüsselten Form im Klartext auf dem Display des Tokens zur Anzeige gebracht. Der User löst dann durch einem am Token befindlichen Auslöser das automatische Erzeugen des Authentisierungsmerkmals aus über eine erneute Verschlüsselung mit einem ebenfalls im Token gespeicherten Tokenschlüssel, der auf dem Display im Klartext angezeigten Auswahl der Transaktionsdaten, wenn der Klartext mit der farblich visuell hervorgehobenen Auswahl auf der Eingabenmaske übereinstimmt.

Das Authentisierungsmerkmal gemäß diesem Verfahren ist eine Ziffernfolge, nämlich die mit dem Tokenschlüssel verschlüsselte Auswahl der Transaktionsdaten. Diese mit dem Tokenschlüssel verschlüsselte Auswahl der Transaktionsdaten gibt der User dann über die Tastatur in eine für das Authentisierungsmerkmal vorgesehenem Feld in die Eingabemaske ein.

Anschließend wird das Authentisierungsmerkmal über den Client an den Server übermittelt, wo das empfangene Authentisierungsmerkmal dann mit einem dem Server bekannten, dem Tokenschlüssel entsprechenden Schlüssel entschlüsselt wird und mit dem anfänglich vom Server erzeugten Auswahl der Transaktionsdaten verglichen wird. Bei Übereinstimmung gelten die empfangenen Transaktionsdaten als authentisiert.

Eine Schnittstelle zwischen dem Token und dem Server wird in diesem Verfahren durch den User gebildet bzw. vermittelt, der durch Vergleich der Anzeige auf dem Display und ein entsprechendes Auslösen der zweiten Verschlüsselung die Erzeugung des Authentisierungsmerkmals realisiert. Dieses Verfahren erfordert jedoch im Vergleich zu dem oben vorgestellten Verfahren ein häufigeres Kommunikationserfordernis zwischen Client und Server und basiert auf einem tokenspezifischen Serverschlüssel und einem serverspezifischen Tokenschlüssel oder einem Schlüsselpaar einer vorzugsweise asymmetrischen Verschlüsselungverfahrens.

Ein Vorteil dieses Verfahrens ist, dass das Token über keine Schnittstelle zum Client verfügen muss, bzw. über keine Schnittstelle verfügen muss, mit der eine Verbindung zum Server aufgebaut werden könnte. Der Client selbst kann also einfach aufgebaut sein, insbesondere ohne eine USBSchnittstelle. Ein weiterer Vorteil dieses Verfahrens besteht auch darin, dass der User das Authentisierungsmerkmal in Form der Ziffernfolge als OTP für die Transaktion gefahrlos über die Tatstatur eingeben kann. Der Abhörer kann dann das abgehörte Authentisierungsmerkmal sogar zusammen mit den abgehörten Transaktionsdaten nicht für eine Attacke nutzen. Der Abhörer müsste eine neue Kommunikationssession mit dem Bankserver eröffnen um die nicht-authentischen Transaktionsdaten zusammen mit dem Authentisierungsmerkmal an den Bankserver absetzen zu können. Im Zuge dieser Kommunikationssession würde der Bankserver aber eine neue Zufallsauswahl aus den nicht-authentischen Transaktionsdaten treffen und somit das abgehörte Authentisierungsmerkmal obsolet machen.

Die Aufgabe wird ferner insbesondere auch durch ein System zum Authentisieren der authentisierungsbedürftigen Transaktionsdaten für die elektronische Transaktion gemäß beiliegendem Hauptanspruch.

Das System umfasst neben dem Client auch den Server, wobei es sich bei dem Server nicht zwangsläufig um den Bankserver handeln muss, da das Authentisierungsverfahren gemäß der Erfindung auch durch einen externen Server implementiert werden kann, der von einem externen Dienstanbieter als Dienst für die Bank verwaltet wird. Der externe Server des externen Dienstleiters implementiert alle wesentlichen Verfahrensschritte im Zusammenhang mit dem erfindungsgemäßen Authentisierungsverfahren.

Bei erfolgreicher Authentisierung der Transaktionsdaten wird dem eigentlichen Bankserver das Signal zum Ausführen der Transaktion übermittelt. Der Server und der Client kommunizieren über eine Clientschnittstelle, die geeignet, ist die Transaktionsdaten vom Client zu empfangen bzw. das Authentisierungsmerkmal vom Token über den Client zu empfangen.

Das Token selbst ist gemäß einer Ausführungsform als mobiles Endgerät ausgebildet, z.B. als Mobilfunktelefon oder als PDA (Personal Digital Assistant), wobei vorteilhafterweise das mobile Endgerät eine Kameraeinheit als optischen Empfangsmodul umfasst. Alternativ umfaßt das mobile Endgerät eine Kameraeinheit mit Funkschnittstelle, z.B. WLAN-Anschluß, zur Übertragung der erfaßten Daten.

Gemäß einer Ausführungsform der Erfindung wird, wenn das Token als mobiles Endgerät ausgebildet ist, die über die Kameraeinheit erfasste Repräsentation der Eingabemaske mit den Transaktionsdaten über MMS oder über eine eigene geeignete Software über ein Mobilfunknetz oder ein anderes Netzwerk (WLAN etc.) direkt an den Server übermittelt.

Das Authentisierungsmerkmal in Form des digitalisierten Bildes der Eingabemaske mit den Transaktionsdaten wird hierbei gemäß einer Ausführungsform zusätzlich optional signiert und/ oder verschlüsselt, wobei die Signatur über eine in dem mobilen Endgerät geladenen Signaturschlüssel, oder über SIM, Secure Flash Card, Secure Element, über ARM Trust Zone oder über eine NFC angekoppelte Bankkarte erfolgt.

Das System umfasst neben der Client-Schnittstelle noch eine Token-Schnittstelle, über die das Token mit dem Server kommuniziert und insbesondere das Authentisierungsmerkmal an den Server überträgt.

Gemäß einer Ausführungsform der Erfindung ist die Token-Schnittstelle im Fall, dass das Token als mobiles Endgerät ausgebildet ist, als Bluetooth- oder Infrarot-Schnittstelle (IRDA) vorgesehen, so dass das Authentisierungsmerkmal von dem mobilen Endgerät zum Client und von dort über die Clientschnittstelle an den Server übermittelt wird. Der Client ist gemäß dieser Ausführungsform ebenfalls mit Bluetooth oder Infrarot-Schnittstelle zum Empfang von dem mobilen Endgerät ausgestattet ist.

In einer weiteren Ausführungsform ist die Personalisierungsschnittstelle des Tokens, für den Fall dass es sich bei dem Token um ein mobiles Endgerät handelt, ebenfalls als Bluetooth- oder Infrarot-Schnittstelle ausgebildet, so dass in diesem Fall die Personalisierung des Handys durch die Personalisierungseinheit über den Client bereitgestellt wird, von dem der User die Transaktionsdaten absetzt.

Die oben genannten Schnittstellentechnologien, wie Bluetooth oder Infrarot, sind nur beispielhaft. Es sind auch andere Schnittstellentechnologien möglich, wie z.B. RFID, WLAN, UMTS etc.

Gemäß einer weiteren Ausführungsform wird das mobile Endgerät durch ein geeignetes Programm, z.B. ein Java-Aplet, von einem Pushdienst OTA (Over-the-Air) aufgeladen, wobei dieses Aufladen vom User bestätigt wird.

Eine andere Ausführungsform der Erfindung ist, dass das Token als SmartCard oder als USB-Token mit SmartCard ausgebildet ist, wobei das Token weiterhin umfasst einen aufladbaren Akkumulator und eine sichere Mikroprozessoreinheit, die als SmartCard-Chip in der SmartCard ausgebildet ist. Das Aufladen des Akkumulators erfolgt beispielsweise durch Anschluss an den Client über die USB Schnittstelle.

Gemäß einer Ausführungsform ist das optisches Empfangsmodul als CMOS Kamera oder als optischer Sensor ausgebildet. In einer alternativen Ausführungsform kann das Token auch lediglich über eine USB-Schnittstelle für eine USB-fähige Kameraeinrichtung umfassen.

Gemäß einer Ausführungsform der Erfindung ist die die Personalisierungsschnittstelle als Kontaktlosschnittstelle nach ISO 14443, als Bluetooth-Schnittstelle oder als Infrarot-Schnittstelle (IRDA) ausgebildet. Gemäß einer anderen Ausführungsform ist auf dem Token eine Chipkartenlesevorrichtung angeordnet, so dass das Token durch einen Chip, den der User von der Personalisierungseinrichtung ausgehändigt bekommt, personalisiert wird, wobei dieser Chip in Chipkartenlesevorrichtung über einen hierfür vorgesehenen Schlitz eingelegt wird.

Bei einer alternative Ausführungsform umfasst das Token ein einfaches numerisches Display, in dem der User die von der optische Empfangseinrichtung empfange optische Repräsentation der auf der Eingabemaske dargestellten Transaktionsdaten kontrollieren kann.

Gemäß einer anderen Ausführungsform der Erfindung, ist das Token als sehr einfaches Token ausgebildet und umfasst lediglich einen optischen Sensor, eine sichere Mikroprozessoreinheit mit Speicher auf dem ein dem Serverschlüssel entsprechender Schlüssel und der Tokenschlüssel abgespeichert sind. Weiter umfasst der einfache Token den Auslöser für die Verschlüsselung der ausgewählten Transaktionsdaten mit dem Tokenschlüssel, und das einfache numerisches Display zur Darstellung der erfassten Auswahl der Transaktion auf der Eingabemaske.

Eine alternative Aufgabenlösung sieht ein Speichermedium vor, das zur Speicherung des vorstehend beschriebenen, computer-implementierten Verfahrens bestimmt ist und von einem Computer lesbar ist.

In der folgenden detaillierten Figurenbeschreibung werden nicht einschränkend zu verstehende Ausführungsbeispiele mit deren Merkmalen und weiteren Vorteilen anhand der Zeichnung besprochen. In dieser zeigt:
- Figur 1: Ist eine schematische und übersichtsartige Darstellung über wesentliche Module eines Systems zum Authentisieren von Transaktionsdaten gemäß einer bevorzugten Ausführungsform der vorliegenden Erfindung.
- Figur 2: Zeigt ein Flussdiagram mit allen wesentlichen Verfahrens- schritten des Authentisierungsverfahrens gemäß einer bevor- zugten Ausführungsform der vorliegenden Erfindung.
- Figur 3: Ist eine schematische und übersichtsartige Darstellung über wesentliche Module eines Systems zum Authentisieren von Transaktionsdaten gemäß einer weiteren Ausführungsform der vorliegenden Erfindung.
- Figur 4: Zeigt ein Flussdiagram mit allen wesentlichen Verfahrens- schritten des Authentisierungsverfahrens gemäß einer weiteren Ausführungsform der vorliegenden Erfindung.

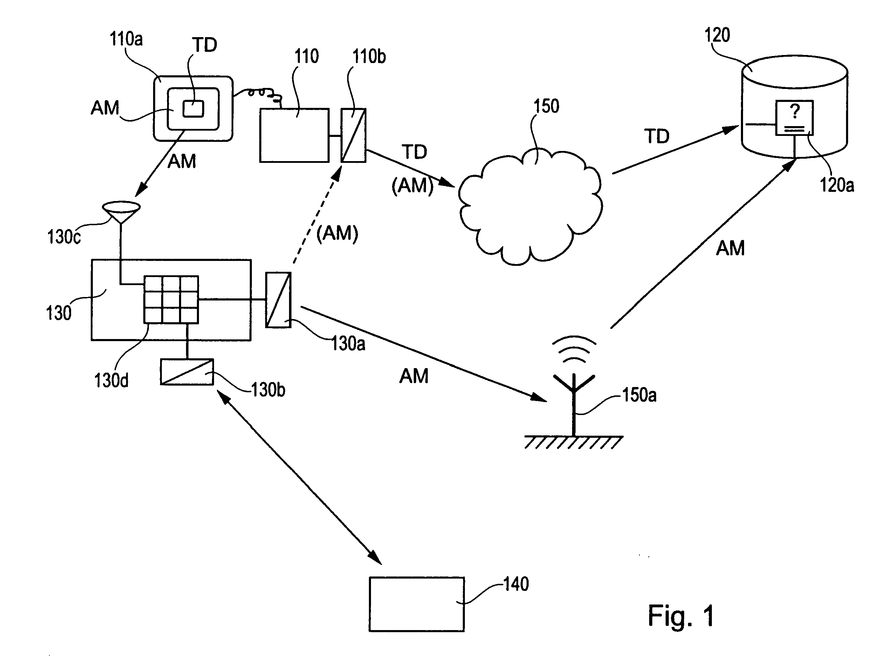

Figur 1 zeigt schematisch ein System zum Authentisieren von Transaktionsdaten für eine elektronische Transaktion. Im Folgenden wird anhand der Figur 1 und den dort dargestellten Komponenten ein Szenario beschrieben in Bezug auf Internet-Banking Anwendungen.

Ein Kunde, im Folgenden User genannt, möchte im Rahmen des Internet-Banking eine elektronische Transaktion im Rahmen einer elektronischen Zahlungsanweisung ausführen. Um Transaktionsdaten TD für die Transaktion authentisieren zu können, verteilt die Bank einmalig an den User ein Token 130. Das Token ist eine Hardwarekomponente anhand derer der User ein den Transaktionsdaten TD zuordenbares Authentisierungsmerkmal AM erzeugen kann. Die Transaktionsdaten TD umfassen im Allgemeinen Daten bezüglich des Users (Sender), Daten bzgl. des Empfängers der Zahlungsanweisung, und Daten über die Höhe der Zahlungsanweisung.

Das Token 130 umfasst ein optisches Empfängermodul 130c (z.B. eine CMOS-Kamera oder einen optischen Sensor, z.B. Photodiode, oder einen CCD-Chip) eine Mikroprozessoreinheit 130d mit Speicher, z.B. in Form eines Chips sowie einer Tokenschnittstelle 130a, die vorzugsweise als USB-Schnittstelle ausgebildet ist. Die Tokenschnittstelle ermöglicht eine Kommunikation des Tokens mit einem Bankserver 120, wobei die Kommunikation entweder indirekt über einen Client 110 bzw. dessen Client-Schnittstelle 110b erfolgt, oder direkt mit dem Bankserver 120 erfolgt. Die Client-Schnittstelle 110b am Client 110 ermöglicht die Kommunikation des Clients 110 mit dem Bankserver 120. Falls beispielweise die Tokenschnittstelle als USB Schnittstelle ausgebildet ist, würde die Kommunikation mit dem Bankserver 120 indirekt erfolgen, d. h. über einen entsprechenden USB-Port am Client 110 zusammen mit der Client-Schnittstelle 110b aufgefasst wird. Die Gesamtheit dieser Komponenten ist dabei vorteilhafterweise als SmartCard ausgebildet oder in eine SmartCard integriert, so dass das Token 130 dem User ein Höchstmaß an örtlicher Flexibilität ermöglicht.

Um nun mit Hilfe dieses Tokens 130 die Transaktionsdaten TD authentisieren zu können, gibt der User über einen Client 110 die Transaktionsdaten TD ein, wobei die Transaktionsdaten TD auf einer Eingabemaske 110a dargestellt werden. Die Eingabemaske 110a ist z.B. als interaktive graphische Benutzeroberfläche durch eine Browsersoftware auf einem Monitor dargestellt, wobei der Monitor mit dem Clientcomputer 110 verbunden ist, und wobei der Clientcomputer 110 über die Browsersoftware und mittels der Client-schnittstelle 110b eine Verbindung über ein Computernetzwerk 150 zu dem Bankserver 120 aufgebaut hat. Die Eingabemaske 110a hat insbesondere Felder für die Aufnahme der Transaktionsaktionsdaten TD, wobei die Interaktivität und Ausgestaltung wie z. B. Funktionalitäten und Anzeige von Buttons auf der Eingabemaske 110a durch ein Eingabemaskensteuerungsmodul (z. B. CGI- Skript) am Server 120 koordiniert und gesteuert wird. Das Eingabemaskensteuerungsmodul kommuniziert dabei sowohl mit der Browsersoftware als auch mit einem Authentisierungsmodul 120a auf dem Bankserver 120.

Nach Eingabe der Transaktionsdaten TD durch den User, werden Transaktionsdaten TD in gewöhnlicher Weise unter Aufbau einer verschlüsselten Verbindung (z.B. SSL über http) an den Bankserver 120 übermittelt. Das auf dem Bankserver 120 laufendes Authentisierungsmodul 120a empfängt dabei die Transaktionsdaten TD, wobei diese durch das Authentisierungsmodul 120a auf dem Server 120 zwischengespeichert werden. Da es sich bei dem Authentisierungsverfahren gemäß der Erfindung um eine 2-Faktor-Authentisierung handelt, ist das Authentisierungsmodul 120a so programmiert, dass eine Warteschleife instanziiert wird, die darauf wartet, von dem User ein den diesen Transaktionsdaten TD zugeordnetes Authentisierungsmerkmal AM zu empfangen. Die Identität des Users entnimmt das Authentisierungsmodul 120a dabei den Transaktionsdaten TD. Zu diesem Zeitpunkt weiß das Authentisierungsmodul 120a noch nicht, ob die Transaktionsdaten TD authentisch sind, d. h. ob der Sender der Transaktionsdaten TD wirklich dem User entspricht.

Der User kann nun mit Hilfe des Tokens 130 das Authentisierungsmerkmal AM erzeugen. Hierzu werden die Transaktionsdaten TD, die auf der Eingabemaske 110a als Einträge lesbar dargestellt sind von dem optischen Empfängermodul 130c des Tokens 130 erfasst. Im einfachsten Falle wird das gesamte Display samt Eingabemaske 110a mit den darin dargestellten Transaktionsdaten TD als Fotografie erfasst, und in dem Speicher der Mikroprozessoreinheit 130d im Token 130 als digitales Bild (z.B. in einem JPEG-Format mit hinreichend großer Auflösung) abgelegt. Gemäß einer anderen Ausführungsform der Erfindung ist es auch möglich, dass die Transaktionsdaten TD in einem zusätzlichen auf dem Display angezeigten Fenster in maschinenlesbarer Form z.B. als Barcode oder Bit-Stream dargestellt werden, nachdem der User diese zusätzliche Darstellung über eine auf der Eingabemaske 110a bereitgestellten Funktionalität angefordert hat. Dieses zusätzlich angezeigte Fenster kann z. B. durch einen FLASH Plug-in erzeugt werden. Durch diese zusätzliche Darstellung der Transaktionsdaten TD in maschinenlesbarer Form, kann das optische Empfängermodul 130c auch als einfacher, optischer Sensor ausgebildet sein, der diese Transaktionsdaten TD auch für eine solche einfache Form des optischen Empfängermoduls 130c erfassbar macht. Das über das optische Empfangsmodul 130c erfasste Bild kann nun als Authentisierungsmerkmal AM für die in dem Bild lesbar dargestellten Transaktionsdaten TD dienen und von dem User an den Bankserver 120 übermittelt werden.

Damit der Bankserver 120 das Authentisierungsmerkmal AM den User bzw. dessen Token 130 eindeutig zuordnen kann, muss das Token 130 gemäß einem Aspekt der Erfindung vor dem Einsatz in dem hier vorgeschlagenen Authentifizierungsverfahren von einer Personalisierungseinheit 140 personalisiert werden. Die Personalisierung des Tokens 130 bezüglich des Users erfolgt über die in dem Token 130 bereitgestellte Personalisierungsschnittstelle 130b. Prinzipiell kann die Personalisierung auch über jede andere geeignete Schnittstelle erfolgen. Der Vorgang des Personalisierens kann dabei auf unterschiedliche Art und Weise erfolgen. Die Personalisierung könnte z.B. vor dem Aushändigen des Tokens 130 an den User durch die Bank erfolgen, oder über die Personalisierungsschnittstelle 130b, wobei in diesem Fall der Personalisierungsvorgang durch einen Dienst erfolgt, der von der Personalisierungseinheit 140 angeboten wird. Die Personalisierungsschnittstelle 130b kann z.B. eine Schnittstelle nach ISO 14443 sein, mit der das Token 130 durch eine Vorrichtung zur Übertragung von Personalisierungsdaten, wobei diese Vorrichtung z. B. an einem POS (Point of Service)von einer Personalisierungseinheit 140 bereitgestellt wird, personalisiert werden kann. Die Personalisierungseinheit 140 kann hierbei entweder die Bank oder externer Dienstanbieter sein. Gemäß einer anderen Ausführungsform, Personalisierungsschnittstelle 130b als Chipkartenleseeinrichtung ausgebildet, auf der z.B. ein Schlitz zur Aufnahme einer Chipkarte angeordnet ist. Diese Chipkarte enthält Personalisierungsdaten, die bestätigen, dass die Personalisierung erfolgte, wobei diese Personalisierungsdaten zusammen mit dem Authentisierungsmerkmal AM an den Bankserver 120 übermittelt werden, so dass der Bankserver 120 die erfolgte Personalisierung registrieren kann. Die Personalisierungsdaten umfassen insbesondere eine Geräte ID des Tokens 130.

Der User bezieht die Chipkarte von der Personalisierungseinheit 140.

Personalisierungsdaten, die eine User-ID mit einer Geräte-ID des Tokens 130 verknüpfen, werden von der Personalisierungseinheit 140 über die Personalisierungsschnittstelle 130b im Speicher des Mikroprozessoreinheit 130d gespeichert. Über die Mikroprozessoreinheit 130d wiederum, werden die Personalisierungsdaten mit dem Authentisierungsmerkmal AM verknüpft (in diesem Fall das Bild der Eingabemaske 110a mit den darin dargestellten Transaktionsdaten TD) und über die Tokenschnittstellen 130a an den Bankserver 120 übertragen. Vorteilhafterweise ist die Tokenschnittstelle 130a als USB-Schnittstelle ausgebildet, so dass das Authentisierungsmerkmal AM (zusammen mit den Personalisierungsdaten) indirekt über die Clientschnittstelle 110b über das Netzwerk 150 an den Bankserver 120 übertragen werden kann. Wenn die Übertragung an den Bankserver 120 indirekt über den Client erfolgt, so soll die Client-Schnittstelle 110b insbesondere in der Lage sein, über geeignet Zwischenmodule, mit der Tokenschnittstelle 130a des Tokens 130 kommunizieren zu können, damit das Authentisierungsmerkmal AM an den Bankserver 120 weitergeleitet werden kann.

Die Übertragung des Authentisierungsmerkmals AN kann aber auch direkt unter Umgehung des Clients z.B. über ein alternatives Netz 150a an den Bankserver 120 erfolgen. Gemäß einer Ausführungsform der Erfindung ist dies insbesondere dann möglich, wenn das Token 130 als ein mit einer Kamera ausgestattetes mobiles Endgerät (z. B. Mobilfunktelefon oder PDA (Personal Digital Assistant)) ausgebildet ist. In diesem Fall würde das über die Kamera erzeugte Authentisierungsmerkmal AM bei einem Mobilfunknetz als alternatives Netzwerk 150a erfolgen. Der Mobilfunkanbieter würde hier die Rolle der Personalisierungseinheit 140 übernehmen. Nachdem das Authentisierungsmerkmal AM als digitales Bild vom Bankserver 120 empfangen wird, werden die in dem Bild dargestellten Transaktionsdaten TD, z.B. über eine OCR Software, von dem Authentisierungsmodul 120a extrahiert und mit dem vorher vom User erhaltenen und auf dem Server 120 zwischengespeicherten Transaktionsdaten TD verglichen. Bei Übereinstimmung gelten die Transaktionsdaten TD als authentisch, womit die Authentisierung der Transaktionsdaten TD erfolgt ist. Authentisierungsmodul 120a ist hierbei so programmiert, dass nur solche Authentisierungsmerkmale AM registriert werden bzw. empfangen werden, für die der Authentisierungsvorgang gemäß der Erfindung in Betracht gezogen werden kann und/oder die von dem personalisierten Token 130 übermittelt wurden. Personalisierungsdaten werden hierbei insbesondere mit der User-ID abgeglichen. Durch diesen zusätzlichen Abgleich ist ausgeschlossen, dass das Authentisierungsmodul 120a oder ein "nicht-authentisches" Authentisierungsmerkmal AM für die Authentisierung verwertet, die von einem Abhörer erstellt und ebenfalls an den Bankserver übermittelt wurden, nachdem dieser die zuvor vom User z.B. über eine Tastatur am Client 110 eingegebenen Transaktionsdaten TD abgehört hat.

Gemäß der in Figur 1 beschriebenen Ausführungsform der Erfindung, ist das Authentisierungsmerkmal AM als Bild, d.h. also als optische Repräsentation der auf der Eingabemaske dargestellten Transaktionsdaten TD ausgebildet. Erfindungsgemäß ist die Repräsentation der Eingabemaske 110a mit den Transaktionsdaten TD als Klartextrepräsentation ausgebildet. Klartextrepräsentation oder Abbildung der Transaktionsdaten TD auf der Eingabemaske 110a kann vorteilhafterweise lokal durch den User ohne Interaktion mit dem Server 120 oder mit anderen Instanzen erfolgen. Obwohl beim Übermitteln der optischen Klartextrepräsentation der Transaktionsdaten TD der Eingabemaske 110a beim Übertragen an den Server 120 diese optional zusätzlich noch verschlüsselt und signiert werden kann, besteht ein weiterer Vorteil der Erfindung darin, dass das Authentisierungsmerkmal AM grundsätzlich ohne die Verwendung von kryptographischen Verfahren, insbesondere ohne digitale Signaturen auskommt.

Das Authentisierungsmerkmal AM muss aber nicht zwangsläufig als optische Repräsentation der dargestellten Transaktionsdaten TD ausgebildet sein. Gemäß einer anderen Ausführungsform der Erfindung ist das Authentisierungsmerkmal AM als phonetische Repräsentation der dargestellten Transaktionsdaten TD PD ausgebildet. Hierbei ist es vorgesehen, dass anstatt oder zusätzlich zu dem optischen Empfangsmodul 310c ein phonetisches Empfangsmodul (nicht dargestellt) mit dem Token 130 verbunden ist. Gemäß dieser Ausführungsform, würde der User die Transaktionsdaten TD über ein Mikrofon, das mit dem phonetischen Empfangsmodul verbunden ist, aufzusprechen, wobei die Transaktionsdaten TD dann als Sprachdatei in dem Speicher der Mikroprozessoreinheit 130d zwischengespeichert werden, um anschließend über die Tokenschnittstelle 130a - wie oben beschrieben - an den Server 120 als Authentisierungsmerkmal AM übertragen zu werden. In diesem Fall würde das Authentisierungsmodul 120a anstatt der OCR-Software über ein entsprechendes Spracherkennungs- und Verarbeitungsprogramm verfügen, mittels dessen die übertragene Sprachdatei in eine die Transaktionsdaten TD repräsentierende Zeichenkette umgesetzt werden kann. Die so erhaltene Zeichenkette wird dann mit den vorher vom Server 120 erhaltenen Transaktionsdaten TD, die der User über den Browser an den Server 120 übermittelt hat, verglichen werden.

Nebst einer weiteren Ausführungsform verfügt das Token 130 zusätzlich über einen gewöhnlichen OTP-Generator (OTP - One-Time-Password), der die Generierung von aus dem Stand der Technik bekannten OTPs auf Zeit oder Eventbasis ermöglicht. Der User kann dann das Token 130 auch für Szenarien einsetzen bzw. Protokolle einsetzen die die Eingabe von OTPs in der gewöhnlichen Form verlangen. Gemäß einer weiteren Ausführungsform der Erfindung ist das Token 130 zusätzlich mit einer User-ID-Abfrageeinheit (nicht dargestellt) ausgestattet, so dass das Token 130 nur von dem befugten User eingesetzt werden kann. Vorteilhafterweise ist die User-ID für das Token 130 verschieden von derjenigen User-ID (der Bank PIN, die Bestandteil der Transaktionsdaten TD. Damit kann ein Missbrauch des Tokens 130 durch unbefugte Personen verhindert werden, sollten diese in den Besitz des Tokens 130 gelangen. In einer alternativen Ausführungsform erfolgt der Ausschluss einer missbräuchlichen Nutzung des Token 130 auf biometrischem Wege, indem auf dem Token eine Fingerabdruckleseeinheit angeordnet ist.

Eine weitere Ausführungsform des Tokens 130 sieht vor, dieses mit einer LED-Anzeige auszustatten, wobei diese über eine Steuerungseinheit den User darüber informiert, ob die Transaktion erfolgreich ausgeführt werden konnte. Dies kann z.B. dadurch realisiert werden, dass der Server 120 nach Empfangen sowohl der Transaktionsdaten TD über den Browser als auch des zugehörigen Authentisierungsmerkmals AM ein Quittierungssignal an das Token 130 zurücksendet, was durch ein entsprechendes Blinken oder Anzeigen der LED signalisiert würde.

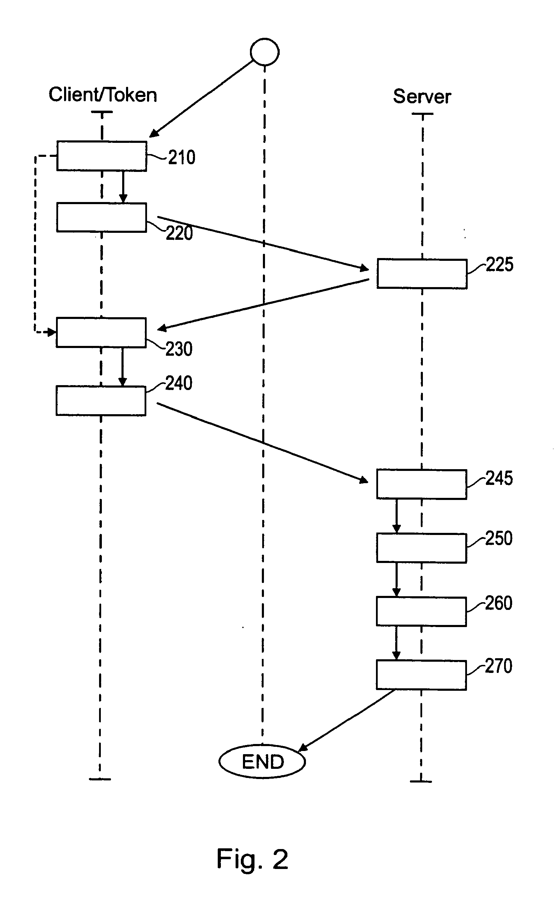

Die Figur 2 zeigt ein schematisches Flussdiagramm des Verfahrens zum Authentisieren der Transaktionsdaten TD gemäß einer bevorzugten Ausführungsform der Erfindung. Die in Figur 2 dargestellte Abfolge von Verfahrensschritten setzt voraus, dass das Token 130 auf den User hin bereits personalisiert wurde.

Zunächst werden im Schritt 210 die Transaktionsdaten TD durch den Client 110 erfasst, indem die Transaktionsdaten TD über eine Eingabemaske 110a, die auf einem mit dem Client 110 verbundenen Display dargestellt wird durch den User eingegeben werden. Anschließend werden in Schritt 220 die so erfassten Transaktionsdaten TD von dem Klienten über die Client-Schnittstelle 110b als verschlüsselte SSL-Nachricht (- Secure Socket Layer) auf Grundlage herkömmlicher Protokolle (z. B. HTTP - Hypertext Transfer Protocol) über eine Verbindung durch das Netzwerk 150 (Internet) an den Server 120 übermittelt. Die Transaktionsdaten TD werden am Server 120 im Schritt 225 empfangen bzw. zwischengespeichert, wobei das Authentisierungsmodul 120a ab diesem Moment auf die Übertragung des zu den Transaktionsdaten TD gehörigen Authentisierungsmerkmal AM wartet. Anschließend wird durch das Token 130 das Authentisierungsmerkmal AM in Schritt 230 erzeugt. Dies geschieht durch fotographische Erfassung der Eingabemaske 110a mit den darauf lesbar dargestellten Transaktionsdaten TD die vorher an den Server 120 übermittelt wurden. Die fotographische Erfassung geschieht durch das optische Empfangsmodul 130c und wird in Form eines elektronischen Bildes z.B. JPEG-Format im Speicher der MikroprozessorEinheit 130d gespeichert. In Schritt 240 wird das gespeicherte elektronische Bild als Authentisierungsmerkmal AM über die Tokenschnittstelle 130a entweder direkt über ein alternatives Netz 150a oder indirekt über die Client-schnittstelle 110b und über das Netzwerk 150 an den Server 120 übermittelt. Nach dem Empfangen 245 des Authentisierungsmerkmals AM durch den Server 120 kann im Schritt 250 das Authentisieren der Transaktionsdaten TD erfolgen, indem das Authentisierungsmerkmal AM durch das Authentisierungsmodul 120a mittels einer OCR-Software verarbeitet wird, um die in dem elektronischen Bild dargestellten Transaktionsdaten TD als Zeichenkette herauszulösen. Anschließend wird in Schritt 260 durch das Authentisierungsmodul 120a die so herausgelöste Zeichenkette mit dem vorher zwischengespeicherten Transaktionsdaten TD verglichen, insbesondere werden dabei die Übereinstimmungen der Empfängerdaten und des Betrages überprüft. Bei Übereinstimmung gelten die Transaktionsdaten TD als authentisch, d.h. vom User stammend, die Transaktion ist somit authentisiert. Im optionalen Schritt 270 kann dann, entweder durch das Authentisierungsmodul 120a oder durch nachgeschaltete Softwaremodule, die Transaktionen ausgelöst, insbesondere also die Zahlungsanweisung genehmigt werden.

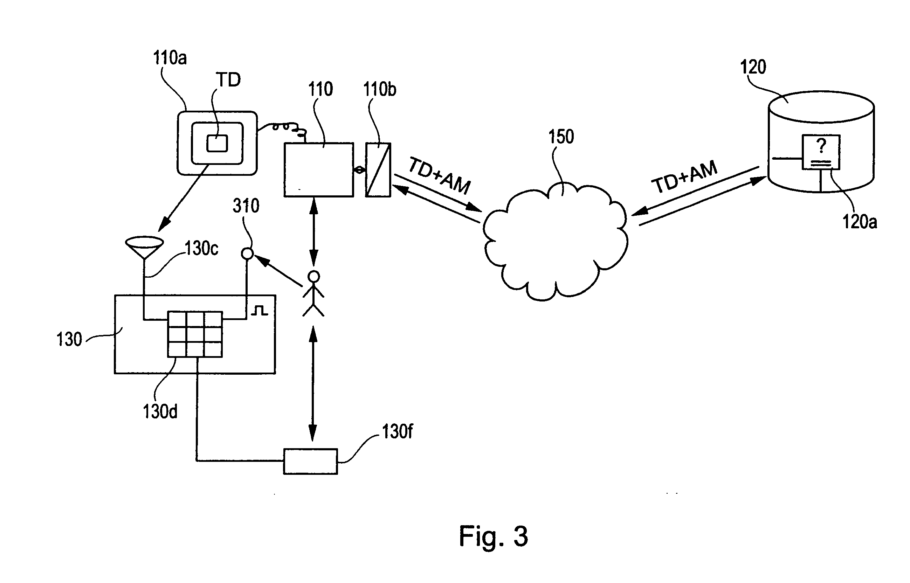

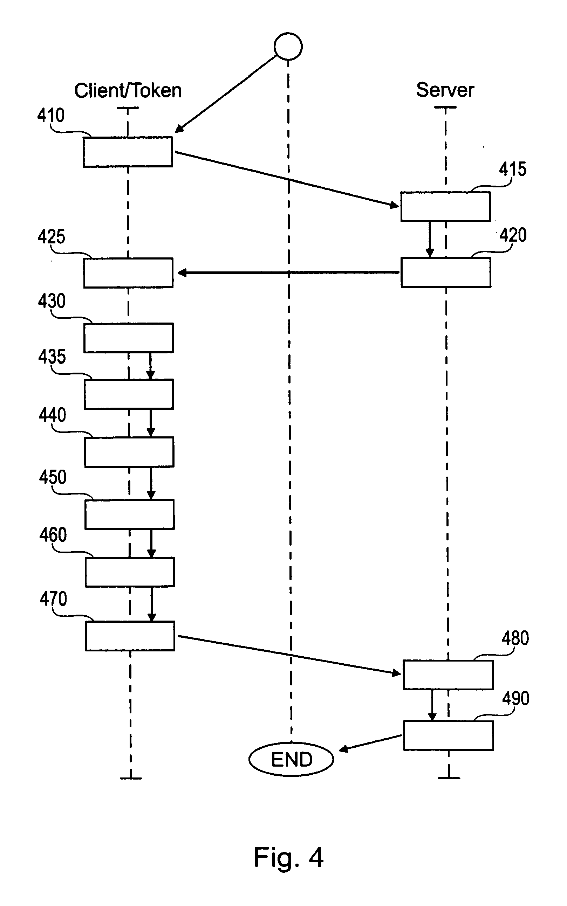

In Figur 3 ist schematisch eine alternative Ausführungsform der Erfindung als ein System zur Authentisierung der Transaktionsdaten TD dargestellt. Das System zum Authentisieren der Transaktionsdaten TD gemäß Figur 3 ist bis auf das Token 130 identisch mit derjenigen Ausführungsform wie sie in Figur 4 dargestellt wird. Das Token 130 gemäß dieser Ausführungsform bietet ein Höchstmaß an örtlicher Flexibilität, da das Token 130 nur über eine einzige Schnittstelle, eine Inputschnittstelle, nämlich das optische Empfangsmodul 130c, verfügt. Anstatt der Tokenschnittstelle 130a verfügt das Token 130 über ein einfach gehaltenes numerisches Display 130f, das mit der Mikroprozessoreinheit 130d kommunizier. Die fehlende Tokenschnittstelle 130a wird hierbei durch das Zusammenspiel mit dem User ausgeglichen; insbesondere mit den Informationen, die einerseits auf der Eingabemaske 110a durch den Server 120 gesteuert werden, und andererseits durch die Informationen, die auf dem Display 130f des Tokens 130 angezeigt werden. Wie ebenfalls bei der in Figur 1 dargestellten Ausführungsform gibt auch hier der User die Transaktionsdaten TD über die Eingabemaske 110a ein und übermittelt die Transaktionsdaten TD in der oben beschriebenen Art und Weise - zum Beispiel über eine gesicherte Internetverbindung - über die Clientschnittstelle 110b an den Bankserver 120 bzw. das Authentisierungsmodul 120a. Nach Empfang der Transaktionsdaten TD generiert das Authentisierungsmodul 120a mithilfe eines Zufallsgenerators eine Auswahl von Ziffern, die vorteilhafterweise die Empfängerdaten (Kontonummer, Bankleitzahl) innerhalb der Transaktionsdaten TD umfassen. Diese Auswahl kommuniziert das Authentisierungsmodul 120a wieder an den Client 110, zum Beispiel in Form eines Signals, das bewirkt, dass die ausgewählten Ziffern auf der Ausgabemaske 110a zum Beispiel farbig abgesetzt oder anders hervorgehoben erscheinen. Dies kann auf einfachste Weise dadurch generiert werden, dass entsprechende Formatierungsbefehle, zum Beispiel HTML-Codes, an die Browsersoftware des Clients 110 gesendet werden, die eine gewünschte farbliche Darstellung der ausgewählten Ziffern bewirkt. Außerdem überträgt das Authentisierungsmodul 120a eine mit einem Serverschlüssel verschlüsselte Version der Auswahl der Ziffern, die auf der Eingabemaske zum Beispiel in einem separaten Fenster als Zeichenkette dargestellt werden, wobei dieser Serverschlüssel auf dem Speicher der Mikroprozessoreinheit 130d des Tokens 130 gespeichert ist. Vorteilhafterweise wird diese verschlüsselte Form der Auswahl der Transaktionsdaten TD in dem neuen Fenster in einer maschinenlesbaren Form angezeigt. Der User bringt das Token 130 in die Nähe des Displays auf dem das zusätzliche Fenster mit den ausgewählten Transaktionsdaten TD in verschlüsselter Form dargestellt wird, so dass das optische Erfassungsmodul 130c die verschlüsselte Auswahl erfassen und zur Weiterverarbeitung in den Speicher der Mikroprozessoreinheit 130d des Tokens 130 abgelegt werden kann. Mittels einer auf dem Chip implementierten OCR-Software wird das von dem optischen Erfassungsmodul 130c erfasste Bild des Fensters mit der verschlüsselten Form der Auswahl der Transaktionsdaten TD in eine Zeichenkette umgewandelt und dann mit dem in dem Speicher abgespeicherten Serverschlüssel verschlüsselt und auf dem numerischen Display 130f des Tokens 130 zur Anzeige gebracht. Nun vergleicht der User die im Klartext angezeigte Auswahl der Transaktionsdaten TD, wie sie auf dem Display 130f des Tokens 130 angezeigt werden, mit der Darstellung der Auswahl der Transaktionsdaten TD auf der Eingabemaske 110a als farbig unterlegte Auswahl der Transaktionsdaten TD. Bei Übereinstimmung betätigt der User einen Auslöser 310, der bewirkt, dass die entschlüsselte Auswahl der Transaktionsdaten TD erneut verschlüsselt wird, allerdings diesmal mit einem Tokenschlüssel, der ebenfalls abgespeichert auf dem Speicher der Mikroprozessoreinheit 130d des Tokens 130 bereitliegt. Das Ergebnis dieser weiteren Verschlüsselung ist wieder eine Zeichenkette, welche im Display 130f des Tokens 130 dem User angezeigt wird. Diese Zeichenfolge stellt das Authentisierungsmerkmal AM dar, das der User nun auf ein entsprechendes Feld der Eingabemaske 110a eintragen kann und das nun wieder vom Client 110 über die Clientschnittstelle 110b an den Server 120 bzw. das Authentisierungsmodul 120a übertragen wird. Das Authentisierungsmodul 120a kennt allerdings den Tokenschlüssel und kann daher durch Entschlüsseln der empfangenen mit dem Tokenschlüssel verschlüsselten Auswahl der Transaktionsdaten TD vergleichen, ob durch eine nochmalige Entschlüsselung des Authentisierungsmerkmals AM dieselbe Ziffernfolge erzeugt wird, wie die, die das Authentisierungsmodul 120a ursprünglich aus den Transaktionsdaten TD ausgewählt hat. Wird Übereinstimmung festgestellt, gelten die Transaktionsdaten TD als authentisiert.

Das Authentisierungsmerkmal AM für die Transaktionsdaten TD ist in der Ausführungsform der Erfindung gemäß Figur 3 ein OTP, das als Ziffernfolge (nämlich diejenige, die durch Verschlüsseln mit dem Tokenschlüssel der Zufallsauswahl der Transaktionsdaten TD erzeugt wurde) die herkömmliche TAN ersetzt. Durch die sehr einfache Ausführung des Tokens 130 bietet dieses System dem User ein Höchstmaß an Mobilität, so dass auch Clients 110 benutzt werden können, die über keinerlei Schnittstellen für externe Geräte verfügen (insbesondere über keine USB-Ports). Das vorgestellte System gemäß Figur 3 ist sicher gegenüber Abhörung zum Beispiel der Tastatur durch einen Abhörer, da dieser selbst durch erfolgreiches Abhören der Transaktionsdaten TD (insbesondere der PIN des Users) und des durch den User über das Token 130 erzeugten Authentisierungsmerkmal AM keine Transaktionsdaten TD an den Server 120 absetzen kann, die von diesem als authentisch interpretiert würden. Der Abhörer kann nämlich die abgehörten und manipulierten Transaktionsdaten TD bzw. das abgehörte Authentisierungsmerkmal AM nur im Rahmen einer neuen Transaktionssession mit dem Server 120 einsetzen. Der Server 120 wird dann aber im Rahmen des in Figur 3 dargestellten Authentisierungsprotokolls über den Zufallsgenerator mit an Sicherheit grenzender Wahrscheinlichkeit auf eine andere Auswahl der manipulierten Transaktionsdaten TD treffen, womit das abgehörte Authentisierungsmerkmal AM obsolet geworden ist.

Gemäß einer anderen Ausführungsform der Erfindung gemäß Figur 3 ist sogar eine noch einfachere Version des Tokens 130 denkbar, in der nämlich das optische Empfangsmodul 130c durch eine USB-Schnittstelle für zum Beispiel eine digitale Kamera ersetzt wird, mit der dann an Stelle des Sensors das zusätzliche Fenster mit der Anzeige der verschlüsselten Auswahl der Transaktionsdaten TD erfasst werden kann.

In Figur 4 ist ein Flussdiagramm dargestellt, das noch einmal in schematischer Weise die einzelnen Schritte des Authentisierungsverfahrens gemäß einer alternativen Ausführungsform der Erfindung darstellt, die durch das System in Figur 3 implementiert wurde.

Im Schritt 410 werden die über die Eingabemaske 110a auf dem Client 110 durch den User eingegebenen Transaktionsdaten TD an den Server 120 bzw. an das Authentisierungsmodul 120a übermittelt. Ein Zufallsgenerator, der mit dem Authentisierungsmodul 120a kommuniziert, wählt im Schritt 415 als Authentisierungsmerkmal AM eine Auswahl aus den empfangenen Transaktionsdaten TD aus und übermittelt ein entsprechendes Signal an den Client 110, was die ausgewählten Transaktionsdaten TD auf der Eingabemaske 110a optisch unterscheidbar von den nicht ausgewählten Transaktionsdaten TD erscheinen lässt. Anschließend verschlüsselt das Authentisierungsmodul 120a die ausgewählten Transaktionsdaten·TD im Schritt 420 mit einem Serverschlüssel und übermittelt diese verschlüsselte Form der Auswahl der Transaktionsdaten TD zurück an den Client 110. Am Client 110 wird im Schritt 425 die verschlüsselte Form der ausgewählten Transaktionsdaten TD in einem separaten Fenster in maschinenlesbarer Form auf dem mit dem Client 110 verbundenen Monitor dargestellt. Im Schritt 430 wird diese auf dem zusätzlichen Fenster dargestellte verschlüsselte Auswahl der Transaktionsdaten TD von dem optischen Empfangsmodul 130c erfasst und in dem Speicher der Mikroprozessoreinheit 130d auf den dem Token 130 abgelegt. Im Schritt 435 wird über den ebenfalls im Speicher abgelegten Serverschlüssel die verschlüsselte Auswahl der Transaktionsdaten TD entschlüsselt, um dann im Schritt 440 im numerischen Display 130f im Klartext zur Anzeige gebracht zu werden. Bei Übereinstimmung der Anzeige auf dem Display 130f mit der farblich unterlegten Auswahl der Transaktionsdaten TD auf der Eingabemaske 110a, erzeugt der User im Schritt 450 über den Auslöser 310 das Authentisierungsmerkmal AM, wodurch die angezeigten Ziffern auf dem Display 130f erneut verschlüsselt werden, allerdings diesmal mit einem ebenfalls im Speicher der Mikroprozessoreinheit 130d befindlichen Tokenschlüssel. Das so erhaltene Authentisierungsmerkmal AM, also eine Ziffernfolge, wird dann über den Client bzw. die Clientschnittstelle 110b nach Eingabe durch den User in ein OTP-Feld der Eingabemaske 110a an das Authentisierungsmodul 120a des Servers 120 im Schritt 470 rückübermittelt. Das dort empfangene Authentisierungsmerkmal AM wird nun nach Entschlüsseln durch den dem Authentisierungsmodul 120a bekannten Tokenschlüssel im Schritt 480 mit der vorher durch das Authentisierungsmodul 120a erfolgten Auswahl der Transaktionsdaten TD verglichen. Bei Übereinstimmung dieser beiden Ziffernfolgen wird im Schritt 490 das Signal für eine erfolgreiche Authentisierung gegeben.

## Patentansprüche

1. Verfahren zum Authentisieren von authentisierungsbedürftigen Transaktionsdaten (TD)für eine elektronische Transaktion zwischen einem User auf einem Client (110) und einem Server (120) mit folgenden Verfahrensschritten:
- Erfassen (210) von Transaktionsdaten (TD) über eine auf dem Client (110) bereitgestellte Eingabemaske (110a);
- Senden (220) der erfassten Transaktionsdaten (TD) von dem Client (110) an den Server (120);
- lokales Erzeugen (230) eines Authentisierungsmerkmals (AM) durch ein in Bezug auf den User personalisiertes Token (130), wobei das Authentisierungsmerkmal (AM) zur Authentisierung der eingegebenen Transaktionsdaten (TD) bestimmt ist;
**dadurch gekennzeichnet, dass**
das Token (130) das erzeugte Authentisierungsmerkmal (AM) an den Server (120) sendet und, dass das Authentisierungsmerkmal (AM) auf dem personalisierten Token (130) eine Repräsentation der Eingabemaske (110a) mit den Transaktionsdaten (TD) ist und, dass das Authentisieren der elektronischen Transaktionsdaten (TD) seitens des Servers (120) durch Vergleich der auf dem Server (120) empfangenen Transaktionsdaten (TD mit dem auf dem Server empfangenen Authentisierungsmerkmal (AM) erfolgt.

2. Verfahren nach Anspruch 1, wobei das Token (130) portabel und/oder separat vom Client (110) ist.

3. Verfahren nach einem der Ansprüche 1 oder 2, wobei das Empfangen des Authentisierungsmerkmal (AM) auf dem Server (120) zeitlich unabhängig vom Empfangen der Transaktionsdaten (TD) auf dem Server (120) erfolgt.

4. Verfahren nach zumindest einem der Ansprüche 1 bis 3, wobei die Transaktion eine elektronische Banktransaktion ist.

5. Verfahren nach einem der vorhergehenden Ansprüche, wobei das Authentisierungsmerkmal (AM) eine optische Repräsentation der Eingabemaske (110A) mit den erfassten Transaktionsdaten (TD) ist.

6. Verfahren nach einem der vorhergehenden Ansprüche, wobei das Authentisierungsmerkmal (AM) eine phonetische Repräsentation der Eingabemaske (110a) mit den erfassten Transaktionsdaten (TD) ist.

7. Verfahren nach einem der vorhergehenden Ansprüche, wobei das Personalisieren des personalisierten Tokens (130) unabhängig von und insbesondere vor dem Erfassen des Authentisierungsmerkmal (AM) durch den Server (120) erfolgt.

8. Verfahren nach einem der vorhergehenden Ansprüche, wobei das Verfahren zusätzlich folgenden Verfahrensschritt umfasst:
- Auslösen (270) der Transaktion falls die Transaktionsdaten (TD) mit dem Authentisierungsmerkmal (AM) übereinstimmen.

9. Verfahren nach einem der vorhergehenden Ansprüche, wobei das erzeugte Authentisierungsmerkmal (AM) erst von dem Token (130) an den Client (110) und dann von dem Client (110) über das Netzwerk (150) an den Server übertragen wird.

10. Verfahren nach einem der vorhergehenden Ansprüche 1 bis 8, wobei das Token (130) das erzeugte Authentisierungsmerkmal (AM) über ein alternatives Netzwerk (150a) direkt an den Server (120) überträgt.

11. Computerprogrammprodukt, welches direkt in einen Speicher eines Computers ladbar ist, mit Programm-Code-Mitteln, um alle Schritte eines Verfahrens nach zumindest einem der Verfahrensansprüche 1 bis 10 auszuführen, wenn das Programm in dem Computer ausgeführt wird.

12. System zum Authentisieren von authentisierungsbedürftigen Transaktionsdaten (TD) für eine elektronische Transaktion, mit:
- einem Client (110), von dem durch einen User die Transaktion angestoßen wird, indem Transaktionsdaten (TD) über eine auf dem Client bereitgestellte Eingabemaske (110a) erfassbar gemacht werden, wobei der Client eine Client-Schnittstelle (110b) zu einem Server (120) hat;
- dem Server (120) zur Authentisierung von Transaktionsdaten (TD), wobei die auf dem Client (110) erfassten Transaktionsdaten (TD) über die Client-Schnittstelle (110b) an den Server (120) übertragen werden;
- ein in Bezug auf den User personalisiertes Token (130), das geeignet ist, lokal ein Authentisierungsmerkmal (AM) zu erzeugen, welches zur Authentisierung der von dem Server erfassten Transaktionsdaten (TD) bestimmt ist, wobei das Token (130) eine Token-Schnittstelle (130a) zum Server (120) hat, über die das Authentisierungsmerkmal (AM) von dem Token (130) an den Server (120) übertragen wird;
**dadurch gekennzeichnet, dass**
das Token (130) ausgebildet ist, um eine Repräsentation der Eingabemaske (110a) mit den Transaktionsdaten (TD) als Authentisierungsmerkmal (AM) auf dem Token (130) zu erzeugen
und, dass der Server (120) ein Authentisierungsmodul (AM) zum Authentisieren der Transaktionsdaten (TD) umfasst, wobei das Authentisierungsmodul (102a) ausgebildet ist, die von dem Server empfangenen Transaktionsdaten (TD) mit dem von dem Server (120) empfangenen Authentisierungsmerkmal (AM) zu vergleichen.

13. Tragbarer Datenträger, der als Token in einem System gemäß Anspruch 12 fungiert und zum Erzeugen eines Authentisierungsmerkmals (AM) im Rahmen einer Authentisierung von authentisierungsbedürftigen Transaktionsdaten (TD) für eine elektronische Transaktion zwischen einem Client (110) und einer Server (120) bestimmt ist.

14. Verfahren zum Authentisieren von authentisierungsbedürftigen Transaktionsdaten (TD) für eine elektronische Transaktion zwischen einem User auf einem Client (110) und einem Server (120) mit folgenden Verfahrensschritten:
- Übermitteln (410) von Transaktionsdaten (TD) von dem Client (110) an den Server (120);
- Darstellen (425) einer Auswahl der Transaktionsdaten (TD) in verschlüsselter und unverschlüsselter Form auf dem Client (110), wobei die Auswahl und die Verschlüsselung durch den Server (120) erfolgen und nur von einem dem User eineindeutig zugeordneten Token (130) entschlüsselt werden kann;
- Erfassen (430) der auf dem Client (110) dargestellten Auswahl von Transaktionsdaten (TD) in der verschlüsselten Form durch das Token (130) und
- Entschlüsseln (435) und Anzeigen der entschlüsselten, erfassten Auswahl von Transaktionsdaten (TD) durch das Token (130),
**gekennzeichnet durch** folgende Verfahrensschritte:
falls die auf dem Token (130) entschlüsselt angezeigte Auswahl von Transaktionsdaten (TD) mit den auf dem Client (110) dargestellten Transaktionsdaten (TD) in unverschlüsselter Form übereinstimmt:
- Erzeugen (450) eines Authentisierungsmerkmal (AM) auf Grundlage der Auswahl von Transaktionsdaten (TD) seitens des Tokens (130);
- Rückübermitteln (470) des erzeugten Authentisierungsmerkmals seitens des Clients (110) in der für den Server (120) verschlüsselten Form;
- Authentisieren (490) der Transaktionsdaten (TD) seitens des Servers (120) **durch** Vergleichen des entschlüsselten Authentisierungsmerkmals (AM) mit der Auswahl der Transaktionsdaten (TD) in unverschlüsselter Form.

15. Tragbarer Datenträger, der als Token (130) zum Erzeugen eines Authentisierungsmerkmals (AM) zum Authentisieren von authentisierungsbedürftigen Transaktionsdaten (TD) für eine elektronische Transaktion zwischen einem User auf einem Client (110) fungiert, mit:
- einem als einzige Input-Schnittstelle dienenden Empfangsmodul (130c) zum Erfassen einer Auswahl der Transaktionsdaten (TD), die auf einer Eingabemaske (110a) des Client (110) dargestellt werden, wobei die Auswahl der Transaktionsdaten (TD) durch den Server (120) erfolgt,
- einer sicheren Mikroprozessoreinheit (130d) mit einem kryptographischen Modul zum Ent- und Verschlüsseln und zum lokalen Erzeugen eines Authentisierungsmerkmals (AM), basierend auf der auf dem Token (130) erfassten Auswahl der Transaktionsdaten (TD),
- einem Auslöser (310), über den das Erzeugen des Authentisierungsmerkmals (AM) automatisch auslösbar ist, und
- einem Display (130f) zum Anzeigen einer entschlüsselten Auswahl der Transaktionsdaten (TD), so dass der User, bei Übereinstimmung der entschlüsselt angezeigten Auswahl der Transaktionsdaten (TD) mit dem auf dem Client (110) dargestellten Auswahl der Transaktionsdaten (TD) in unverschlüsselten Form das Erzeugen des Authentisierungsmerkmals (AM) durch die Mikroprozessoreinheit (130d) über den Auslöser (301) veranlasst.
